# EUROPÄISCHE PATENTSCHRIFT

(11) **EP 1 935 688 B1**
(45) Veröffentlichungstag und Bekanntmachung des Hinweises auf die Patenterteilung: **31.08.2011**
(21) Anmeldenummer: 07023910.8
(22) Anmeldetag: 11.12.2007
(51) Int. Cl.: B60J 1/18, B60J 7/12, B60J 7/14

(54) **Cabriolet-Fahrzeug mit einer an seitlichen Rahmenteilen des Daches gehaltenen Heckscheibe**
Convertible vehicle with a rear window fixed to the side of the roof frame
Véhicule décapotable doté d'une lunette arrière fixée sur les parties de cadre latérales du toit

(30) Priorität: 21.12.2006 DE 102006061837
(43) Veröffentlichungstag der Anmeldung: 25.06.2008
(73) Patentinhaber: Wilhelm Karmann GmbH, 49084 Osnabrück (DE)
(72) Erfinder: Bunsmann, Winfried, 49143 Bissendorf (DE); Heselhaus, Udo, 49479 Ibbenbüren (DE)
(74) Vertreter: Kronthaler, Schmidt & Coll.

(56) Entgegenhaltungen:
- EP-A- 1 164 040
- EP-A- 1 164 041
- DE-A1- 19 940 796
- DE-A1- 19 964 205

## Beschreibung

Die Erfindung betrifft ein Cabriolet-Fahrzeug mit einem beweglichen Dach, das in seiner Offenstellung in der Karosserie ablegbar ist und eine an seitlichen Rahmenteilen gehaltene Heckscheibe umfaßt, nach dem Oberbegriff des Anspruchs 1.

Es ist bekannt, ein Cabriolet-Fahrzeug so auszubilden, daß eine große Heckscheibe vorgesehen ist, die ungefähr bis zum unteren Rand des Daches reicht und bis zur unteren Grenze ihrer Erstreckung an seitlichen Rahmenteilen gehalten ist. Insbesondere bei sog. Softtops, die außerhalb der Heckscheibe einen flexiblen Bezug aufweisen, muß auch bei einer solchen Ausbildung sichergestellt werden, daß trotz der großen Unterbrechung des Bezugs in seinem unteren Randbereich eine sichere und stets gleiche Positionierung des geschlossenen Daches gegenüber der Karosserie erreicht wird.

Die DE 199 40 976 A1 zeigt ein Cabriolet-Fahrzeug mit einer gesonderten Kinematik zur Beeinflussung der Heckscheibe, wobei diese Kinematik über mehrere lang erstreckte Hebel wirkt und daher einen erheblichen konstruktiven Aufwand und zusätzliches Gewicht bedingt sowie eine Einschränkung des Insassenraums verursacht.

Der Erfindung liegt das Problem zugrunde, hier eine verbesserung zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 13 angegeben.

Durch die Erfindung ist ein zuverlässiges und zentriertes Schließen des Daches auch dann ermöglicht, wenn dieses keinen hinteren Spannbügel aufweist. Zudem kann die Heckscheibe selbst bis zum unteren Dachrand reichen, ohne daß dort ein durchgehend gespannter und mit der Karosserie verbundener Bezugrand vorhanden sein müßte. Auch eine separate Beweglichkeit, zum Beispiel Aufschwenkbarkeit, der Heckscheibe ist in der erfindungsgemäßen Ausgestaltung möglich, da die seitlichen Rahmenteilen, die die Heckscheibe halten, stets zuverlässig in ihre Ausgangsposition zurückbewegbar sind. Damit ist ggf. auch ein Schließen der Heckscheibe aufgrund des immer gleichen Abstands der Rahmenteile unter stets gleichen Bedingungen möglich. Dadurch, daß die oder jede Ausrichtungshilfe einen hakenartig hervorragenden Zentrierdorn umfaßt, kann dieser in eine Ausnehmung des Rahmenteils eingreifen. Insbesondere ist damit eine formschlüssige Sicherung möglich. Der Zentrierdorn kann in einer oder insbesondere zwei Raumrichtungen konisch ausgebildet sein, um dadurch beim Einführen automatisch den Rahmenteil bezüglich dieser Richtungen zu zentrieren.

Besonders günstig ist der oder jeder Zentrierdorn in Anpassung an die Bahnkurve des sich schließenden Rahmenteils gekrümmt, zum Beispiel im Fall eines um eine Querachse heranschwenkbaren Rahmenteils kreissegmentförmig. Das Einfädeln der Ausrichtungshilfe erfolgt damit verkantungsfrei. Der Rahmenteil wird schon während der letzten Zentimeter seiner Schließbewegung zwangsgeführt.

Besonders vorteilhaft ist die zumindest eine Ausrichtungshilfe beim Dachschließen bei dessen Ausrichtung bezüglich der Fahrzeugquerrichtung wirksam. Insbesondere bei beidseits der Heckscheibe angeordneten und so zentrierbaren Rahmenteilen ist deren Relativlage zueinander dann zuverlässig gesichert, wodurch insbesondere auch das Einfügen einer beweglichen und in jedem Fall weit nach unten reichenden Heckscheibe erleichtert ist.

Weiterhin kann die zumindest eine Ausrichtungshilfe beim Dachschließen bezüglich dessen vertikaler Ausrichtung wirksam sein, so daß auch die Höhenlage des unteren Dachrandes stets gleich einstellbar ist, insbesondere bei zwei quer zueinander beabstandeten Ausrichtungshilfen.

Sofern die Heckscheibe beweglich und in einem mit dieser mitbeweglichen Schwenkrahmen gehalten ist, dessen unterer Rand bei geschlossenem Dach und geschlossener Heckscheibe von dem oberen Rand einer geschlossenen Heckklappe dichtend hintergreifbar ist, ist einerseits eine geschlossene Position der Heckscheibe gut sicherbar, andererseits kann bei geöffneter Heckklappe eine sehr große Ladeöffnung erreicht werden, die etwa von der Stoßstange bis zu einer oberen Schwenkachse des Daches für die Heckscheibe reicht.

Zusätzlich kann in Schließstellung der Heckklappe die Heckscheibe gegenüber dem Schwenkrahmen aufschwenkbar sein, wodurch dann auch bei geschlossener Heckklappe die Heckscheibe separat geöffnet werden kann, ohne mit dem oberen Rand der Heckklappe zu kollidieren.

Insbesondere kann das Fahrzeug als Steilheckfahrzeug ausgebildet sein, zum Beispiel auch als Klein- oder Kompaktwagen.

Das Dach kann ein sog. Softtop mit einem außerhalb der Heckscheibe einheitlichen, durchgehenden Bezug ausbilden, bei dem die Bezugbereiche zur Dachablage einfaltbar sind. Auch ein sog. RHT (Retractable Hardtop) ist möglich. In diesem Fall bildet die Heckklappe in Doppelfunktion auch einen öffnungsfähigen Deckel eines Dachaufnahmeraums. Beide Öffnungsarten können gleichsinnig sein.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische Seitenansicht eines erfindungs- gemäßen Cabriolet-Fahrzeugs in nach vorne und un- ten abgebrochener Darstellung bei geschlossenem Dach und geschlossenem Deckelteil sowie geschlos- sener Heckscheibe,
- Fig. 2: das Fahrzeug nach Fig. 1 bei zur Freigabe der La- deöffnung für Gepäck aufgeschwenktem Deckelteil,
- Fig. 3: das Fahrzeug nach Fig. 2 bei zusätzlich separat in den von dem Deckelteil überdeckten Raum aufge- schwenkter Heckscheibe,
- Fig. 4: eine ausschnittsweise vergrößerte Heckansicht ei- nes erfindungsgemäßen Fahrzeugs in perspektivi- scher Darstellung von schräg hinten während des Schließens des Daches, wobei neben der tatsächli- chen Stellung seitlicher Rahmenteile der Heck- scheibe die Stellungen nach den Figuren 5 und 6 bereits mit angedeutet sind,
- Fig. 4a: eine Detailansicht des Rahmenteils und der Aus- richtungshilfe in Stellung nach Fig. 4,
- Fig. 5: eine ähnliche Ansicht wie Fig. 4 bei weiter fort- schreitendem Dachschließen und sich dabei aufrich- tender Heckscheibe bei Führung der Rahmenteile durch Eingriff der Ausrichtungshilfen in diese, wiederum mit den Rahmenstellungen nach Fig. 4, 5 und 6,
- Fig. 5a: eine Detailansicht des Rahmenteils und der Aus- richtungshilfe in Stellung nach Fig. 5,
- Fig. 6: eine ähnliche Ansicht wie Fig. 5 bei vollständig geschlossenem Dach und geschlossener Heckklappe,
- Fig. 6a: eine Detailansicht des Rahmenteils und der Aus- richtungshilfe in Stellung nach Fig. 6,
- Fig. 7: eine Detailansicht des die Heckscheibe seitlich einfassenden Rahmenteils ungefähr in den drei nach den Figuren 4 bis 6 dargestellten Momentaufnahmen des Schließvorgangs des Daches,

Das erfindungsgemäße Cabriolet-Fahrzeug 1 kann, wie im gezeichneten Ausführungsbeispiel angedeutet, entweder ein mit zumindest einer Rückbank versehenes vier- oder mehrsitziges Fahrzeug oder auch ein Zweisitzer sein. Die hier gezeigte Steilheckausbildung ist sowohl im Klein- und Kompaktwagenbereich als auch etwa bei Geländewagen oder Vans häufig anzutreffen.

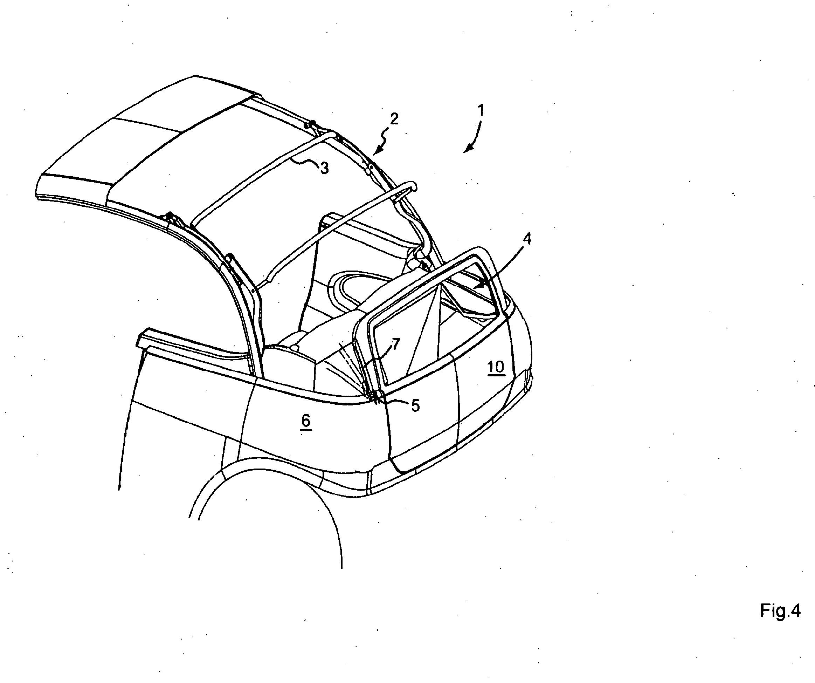

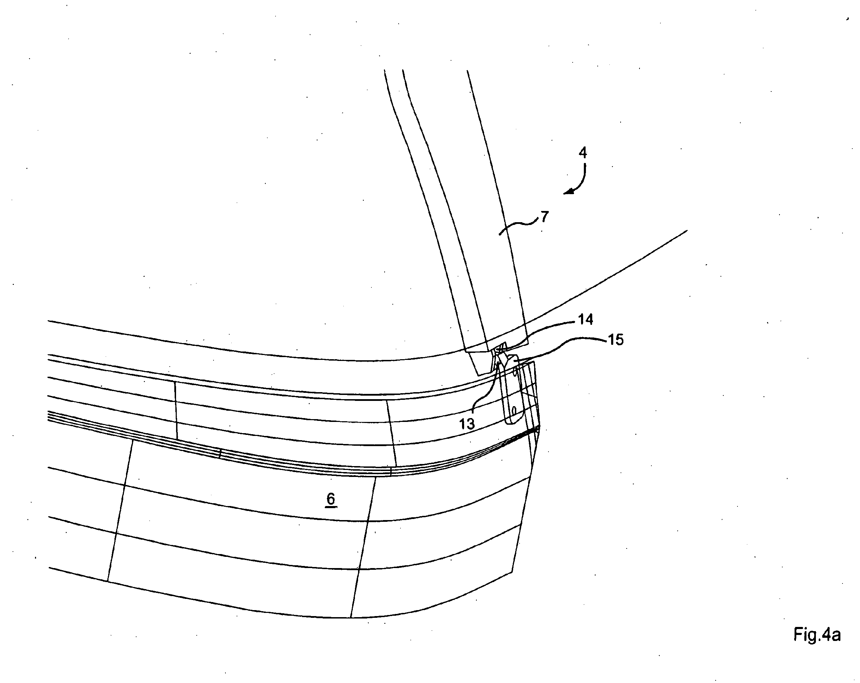

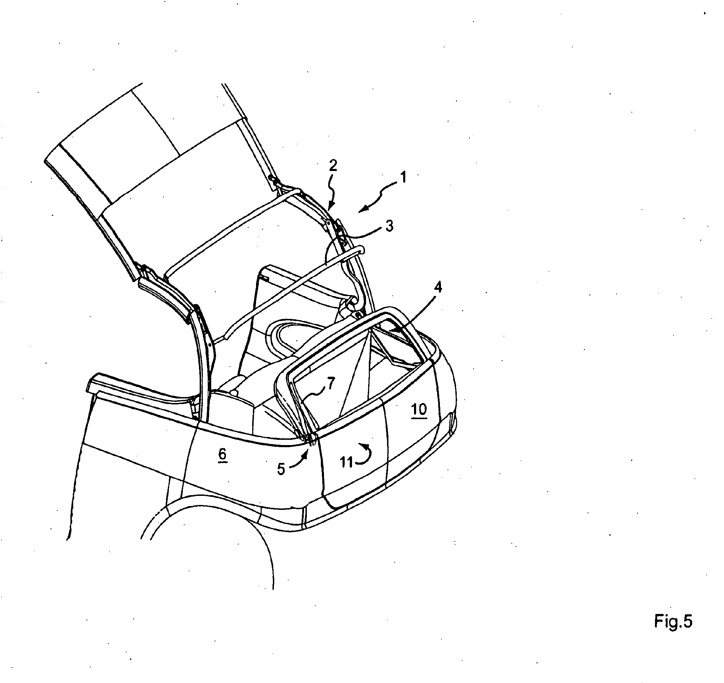

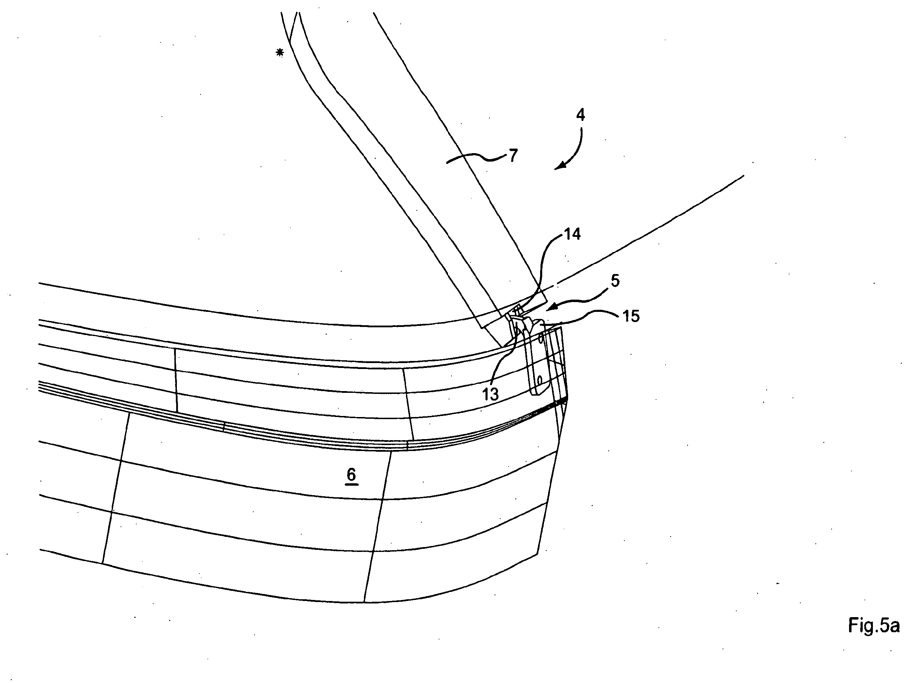

Das bewegliche und in geschlossener Stellung mittelbar oder unmittelbar an einen Windschutzscheibenrahmen anschließende Dach 2 umfaßt ein Dachgestänge 3, über das ein außerhalb einer Heckscheibe 4 durchgehender Dachbezug B gespannt ist, der hier der besseren Übersichtlichkeit halber in den Figuren 4 bis 7 selbst nicht dargestellt ist. Das Dach 2 bildet damit ein sog. Softtop aus.

Alternativ wäre auch ein Dach mit mehreren an ihrer Außenfläche voneinander getrennten und mit zumindest jeweils einem starren Rahmen versehene oder insgesamt plattenförmig ausgebildete Baueinheiten möglich, also ein sog. RHT (Retractable Hardtop). Insbesondere bei einem Softtop sind die unten beschriebenen Ausrichtungshilfen 5 jedoch besonders hilfreich, da der dort seitlich der Heckscheibe gelegenen Bezugbereiche selbst elastisch sind und daher ihre stets gleiche Positionierung beim Dachschließen bei einer bis zum unteren Rand 8 des Daches 2 reichenden Heckscheibe und einer daraus resultierenden Bezugunterbrechung erschwert ist.

Das Dach 2 ist in seiner Offenstellung zumindest im wesentlichen in einem Aufnahmeraum der Karosserie 6 ablegbar, wobei die im Dach 2 gehaltene Heckscheibe 4 dabei nach unten und vorne verlagert und bezüglich der weiteren Dachabschnitte zuunterst gelegen ist.

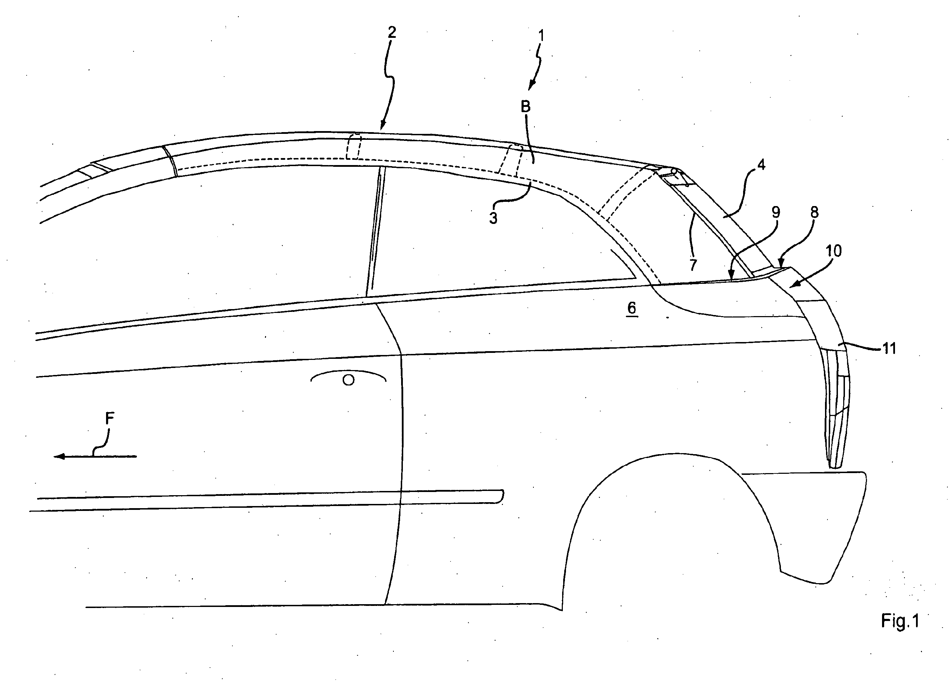

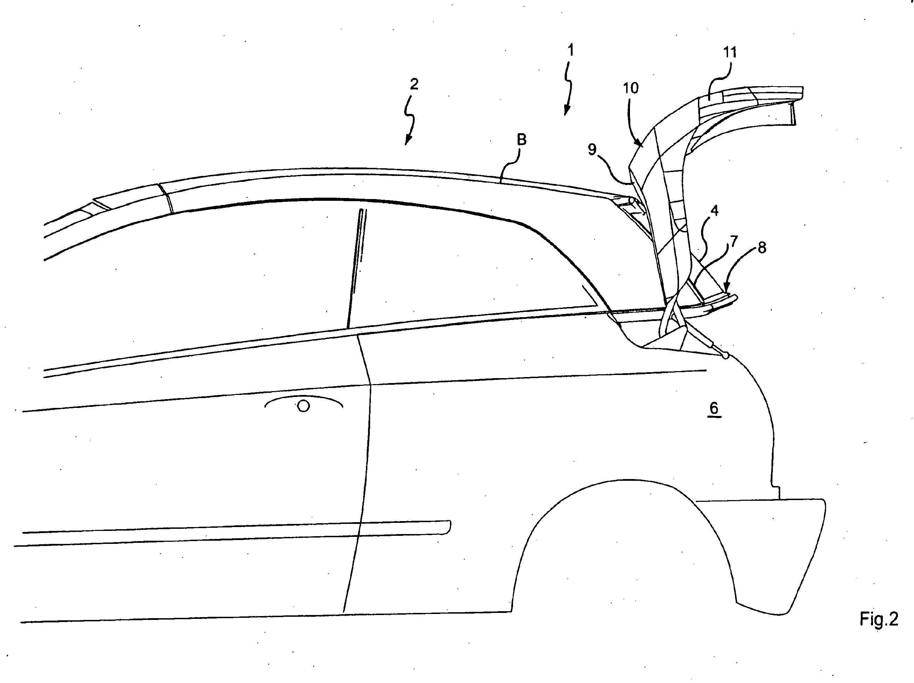

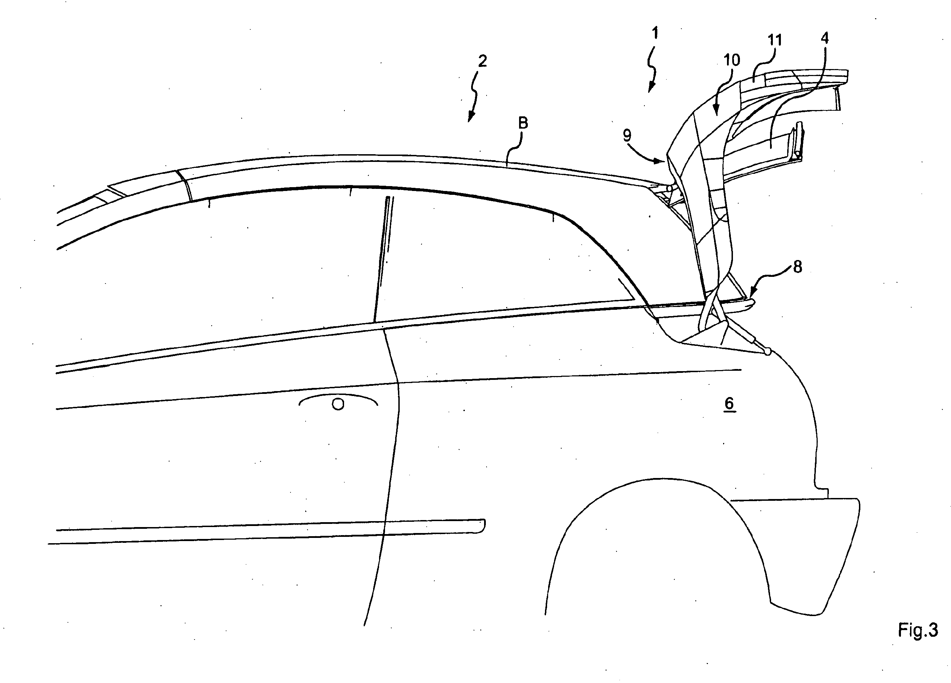

Unterhalb des Daches 2 ist an der Karosserie 6 eine Heckklappe 10 zum Beispiel seitlich oder unten (Fig. 4 bis Fig. 7) oder durch eine Anlenkung im Bereich einer Fensterbrüstungslinie 9 nach oben aufschwenkbar (Fig. 1 bis Fig. 3) und umfaßt einen im wesentlichen aufrechten und den Aufnahmeraum nach hinten abschließenden Heckblendenteil 11.

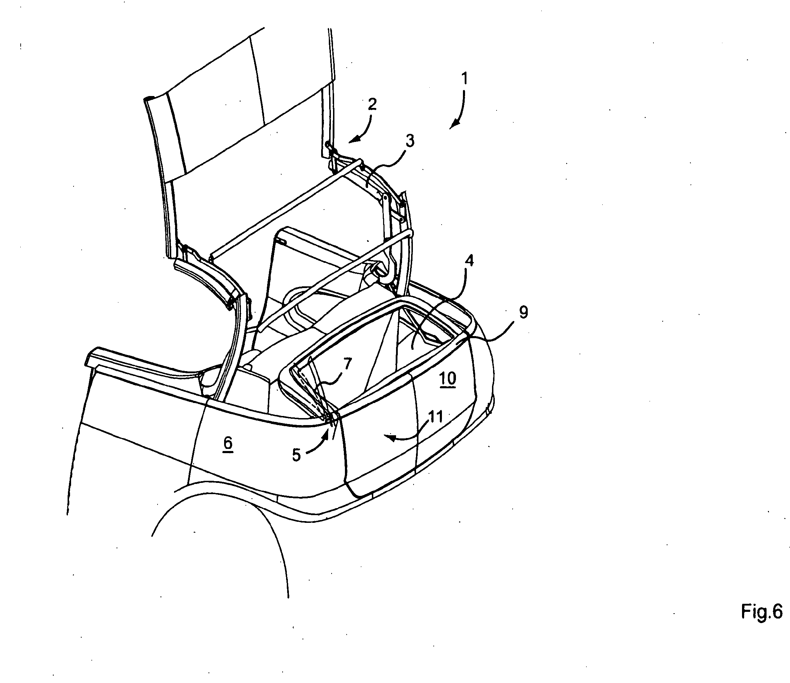

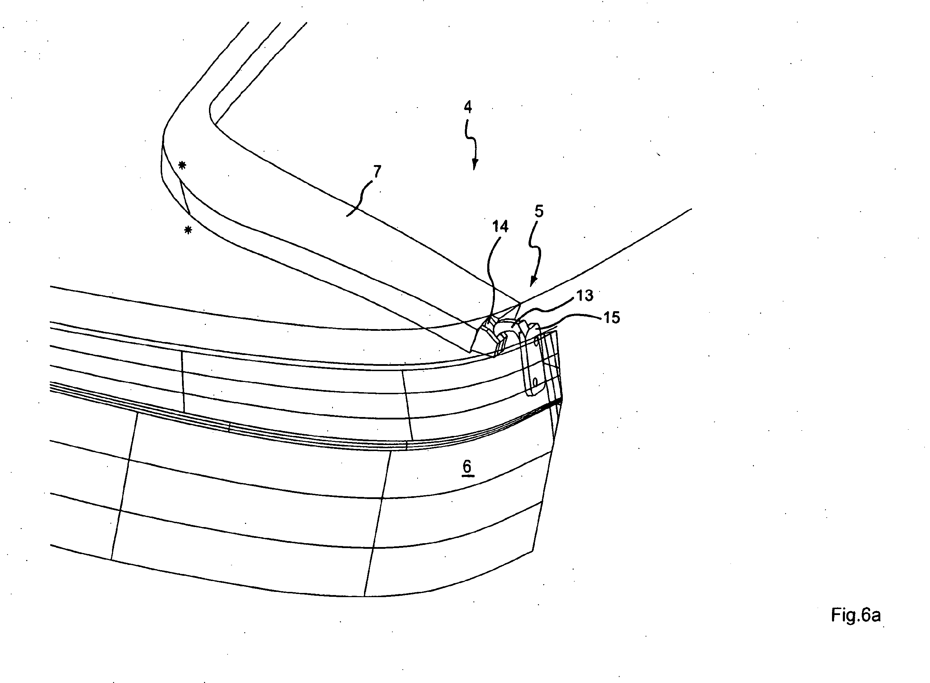

Die Heckscheibe 4 ist seitlich an dem Dachbezug zugeordneten Rahmenteilen 7 gehalten. Zumindest diese Rahmenteile 7 erstrecken sich bis zu dem unteren Rand 8 des Daches 2, der an die Brüstungslinie 9 der Karosserie 6 angrenzt, oder etwas darüber hinaus. Bei geschlossenem Dach 2 ragen die Rahmenteilen 7 schräg oder nahezu vertikal aufwärts (Fig. 6).

In dieser Stellung kann die Heckscheibe 4 separat aufbeweglich, zum Beispiel nach unten in die Heckklappe 10 absenkbar oder nach oben hin aufschwenkbar, sein, zum Beispiel auch mit Hilfe von den seitlichen Rahmenteilen 7 zugeordneten Gasdruckfedern oder ähnlichen Unterstützungselementen, die die Heckscheibe 4 aufdrücken können.

Dabei kann die Heckscheibe 4 als einzelne Baueinheit oder in einen mitbeweglichen Schwenkrahmen eingebettet beweglich sein.

Die Heckklappe 10 kann in ihrer geschlossenen Stellung und geschlossener Stellung des Daches 2 den unteren Rand des Schwenkrahmens und der Heckklappe 10 dichtend übergreifen, so daß aus dieser geschlossenen Stellung der Heckklappe 10 die Heckscheibe 4 nicht separat geöffnet werden kann.

Besonders günstig ist jedoch in dieser Schließstellung der Heckklappe 10 die Heckscheibe 4 gegenüber dem Schwenkrahmen aufschwenkbar. Dann kann auch bei geschlossenem Dach 2 und geschlossener Heckklappe 10 die Heckscheibe 4 aufgeschwenkt werden.

Bei geschlossenem Dach 2 und geschlossener Heckklappe 10 ist durch das Aufschwenken der Heckscheibe 4 ein schneller Zugang zum Gepäckraum ohne großen Kraftaufwand ermöglicht. Damit ergibt sich eine besonders große Ladeöffnung, die etwa von der Stoßstange bis zur oberen Dachfläche reicht. Dennoch ist hierzu keine von oben bis unten durchgehende Heckklappe 10 nötig, sondern diese erstreckt sich in geschlossener Stellung erst ungefähr ab der horizontalen Ebene der Fensterbrüstung 9 nach unten.

Bei Dachöffnung kann die Heckscheibe 4 hingegen nach Art einer herkömmlichen Heckscheibe fest mit den Rahmenteilen 7 verbunden bleiben. Um das Schließen des Daches aus dieser Stellung zu erleichtern, ist der Karosserie 6 zumindest eine Ausrichtungshilfe 5 zugeordnet, die mit dem Rahmenteil 7 bei sich schließendem Dach 2 zusammenwirkt.

Im gezeichneten Ausführungsbeispiel sind zwei Ausrichtungshilfen 5 beidseits der in Schließstellung an den unteren Rand der Heckscheibe 4 oder des sie tragenden Rahmens angrenzenden Heckklappe 10 vorgesehen. Die Ausrichtungshilfen 5 sind dicht neben der Heckklappe 10 an der Karosserie 6 nach innen weisend gehalten. Je nach Bewegungskinematik der Heckklappe 10 können Ausrichtungshilfen 5 auch an dieser gehalten sein.

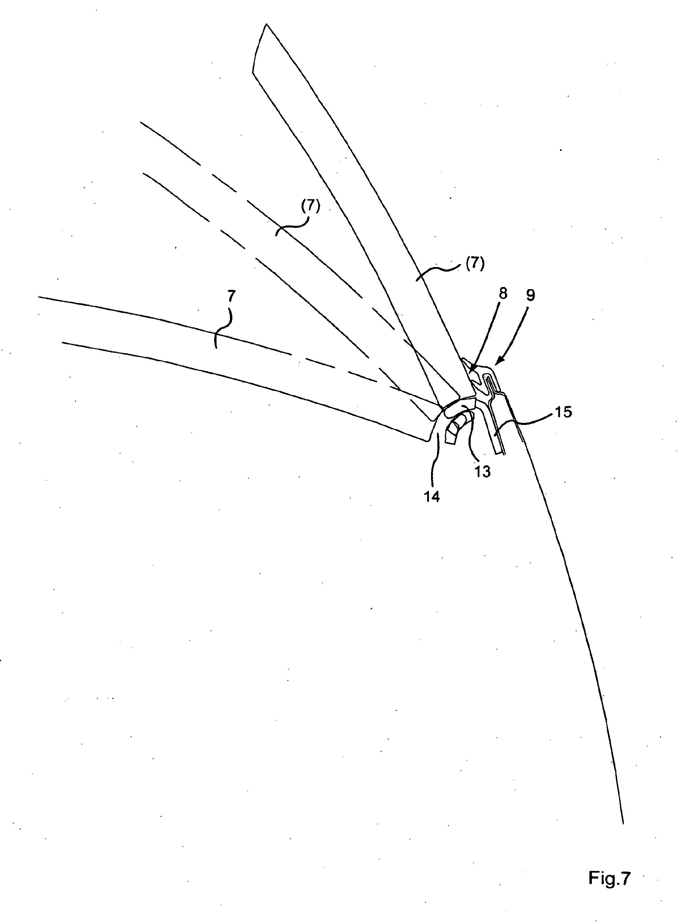

Jede Ausrichtungshilfe 5 umfaßt einen hakenartig mit einer Komponente in Fahrtrichtung F nach vorne ragenden Zentrierdorn 13 (Fig. 7), der einen in Anpassung an die Bahnkurve des sich schließenden Rahmenteils 7 gekrümmten Verlauf aufweist. Da die Rahmenteile 7 hier während des Dachschließens um eine Querachse nach hinten und oben schwenken, weist hier jeder Zentrierdorn 13 zumindest teilweise einen in Seitenansicht kreissegmentförmigen Verlauf auf. Damit kann er in Schließstellung in formschlüssigem Eingriff mit einer im wesentlichen komplementären Ausnehmung 14 des jeweiligen Rahmenteils 7 stehen. Hier hat die den Rahmenteil 7 durchgreifende Ausnehmung 14 in Seitenansicht ebenfalls einen kreissegmentförmigen Verlauf. Beim Dachschließen kann in Endstellung der Zentrierdorn 13 mit seinem vorderen Ende die Ausnehmung durchgreifen.

Weiterhin sind hier die Zentrierdorne 13 bezüglich ihrer Erstreckung in Fahrzeugquerrichtung und bezüglich ihrer Erstreckung in Vertikalrichtung jeweils konisch ausgebildet, was ihr Einfädeln in die Ausnehmungen 14 beim Dachschließen erleichtert und ermöglicht, daß die Ausrichtungshilfen 5 beim Dachschließen bei dessen Ausrichtung bezüglich der Fahrzeugquerrichtung und bezüglich der vertikalen Ausrichtung des Daches wirksam sind.

Für eine exakte Positionierung des Daches 2 weisen die Ausnehmungen 14 der Rahmenteile 7 jeweils nur ein geringes Übermaß gegenüber den Zentrierdornen 13 auf. Diese können zum Vermeiden von Geräuschen und Vibrationen mit einem Kunststoff oder gummiartigem Belag bezogen sein, wobei ein gutes Abgleiten des Zentrierdorns 13 auf den Innenwänden der Ausnehmung 14 sichergestellt sein muß, zum Beispiel durch Verwendung von PU. Auch eine Ausbildung des Zentrierdorns 13 vollständig aus Kunststoff ist möglich. Der Zentrierdorn kann insgesamt einstückig ausgebildet sein und auf der Rückseite in einen Befestigungsflansch 15 zu seiner Festlegung an der Innenseite der Karosserie 6 aufweisen.

Ebenso können die Verhältnisse am Fahrzeug derart umgekehrt sein, daß an den Rahmenteilen nach hinten ragende Hakenteile und an der Karosserie 6 Ausnehmungen für einen formschlüssigen Eingriff vorgesehen sind.

## Patentansprüche

1. Cabriolet-Fahrzeug (1) mit einem beweglichen Dach (2), das in seiner Offenstellung in der Karosserie (6) ablegbar ist und eine an seitlichen Rahmenteilen (7) gehaltene Heckscheibe (4) umfaßt, wobei sich die Rahmenteile (7) zumindest bis zu einem unteren Rand (8) des Daches (2), der an eine Brüstungslinie (9) der Karosserie angrenzt, erstrecken,
**dadurch gekennzeichnet,**
**daß** der Karosserie (6) zumindest eine Ausrichtungshilfe (5) zugeordnet ist, die einen hakenartig hervorragenden Zentrierdorn (13) umfaßt und mit dem Rahmenteil (7) bei sich schließendem Dach (2) zusammenwirkt.

2. Cabriolet-Fahrzeug (1) nach Anspruch 1,
**dadurch gekennzeichnet,**
**daß** der Zentrierdorn (13) einen in Anpassung an die Bahnkurve des sich schließenden Rahmenteils (7) gekrümmten Verlauf aufweist.

3. Cabriolet-Fahrzeug (1) nach einem der Ansprüche 1 oder 2,
**dadurch gekennzeichnet,**
**daß** der Zentrierdorn (13) zumindest teilweise einen in Seitenansicht kreissegmentförmigen Verlauf hat.

4. Cabriolet-Fahrzeug (1) nach einem der Ansprüche 1 bis 3,
**dadurch gekennzeichnet,**
**daß** der Zentrierdorn (13) in Schließstellung in formschlüssigem Eingriff mit einer im wesentlichen komplementären Ausnehmung (14) des Rahmenteils (7) steht.

5. Cabriolet-Fahrzeug (1) nach einem der vorhergehenden Ansprüche,
**dadurch gekennzeichnet,**
**daß** die zumindest eine Ausrichtungshilfe (5) beim Dachschließen bei dessen Ausrichtung bezüglich der Fahrzeugquerrichtung wirksam ist.

6. Cabriolet-Fahrzeug (1) nach einem der vorhergehenden Ansprüche,
**dadurch gekennzeichnet,**
**daß** die zumindest eine Ausrichtungshilfe (5) beim Dachschließen bezüglich dessen vertikaler Ausrichtung wirksam ist.

7. Cabriolet-Fahrzeug (1) nach einem der Ansprüche 1 bis 6,
**dadurch gekennzeichnet,**
**daß** zwei Ausrichtungshilfen (5) beidseits einer öffnungsfähigen und in Schließstellung an den unteren Rand (8) der Heckscheibe oder eines sie tragenden Rahmens angrenzenden Heckklappe (10) vorgesehen sind.

8. Cabriolet-Fahrzeug (1) nach einem der Ansprüche 1 bis 7,
**dadurch gekennzeichnet,**
**daß** die Heckscheibe (4) bei geschlossenem Dach (2) gegenüber den seitlichen Rahmenteilen (7) nach oben aufschwenkbar ist.

9. Cabriolet-Fahrzeug (1) nach einem der Ansprüche 1 bis 8,
**dadurch gekennzeichnet,**
**daß** die Heckscheibe (4) in einem mit dieser mitbeweglichen Schwenkrahmen gehalten ist.

10. Cabriolet-Fahrzeug (1) nach Anspruch 9,
**dadurch gekennzeichnet,**
**daß** bei geschlossenem Dach (2) und geschlossener Heckscheibe (4) der untere Abschluß des Schwenkrahmens von dem oberen Rand der geschlossenen Heckklappe (10) dichtend hintergreifbar ist.

11. Cabriolet-Fahrzeug (1) nach Anspruch 10,
**dadurch gekennzeichnet,**
**daß** in Schließstellung der Heckklappe (10) die Heckscheibe (4) gegenüber dem Schwenkrahmen aufschwenkbar ist.

12. Cabriolet-Fahrzeug (1) nach einem der Ansprüche 1 bis 11,
**dadurch gekennzeichnet,**
**daß** dieses als Steilheckfahrzeug ausgebildet ist und die Heckklappe (10) einen im wesentlichen aufrechten und den Aufnahmeraum des Daches (2) nach hinten abschließenden Heckblendenteil (11) umfaßt.

13. Cabriolet-Fahrzeug nach einem der Ansprüche 1 bis 12,
**dadurch gekennzeichnet,**
**daß** das Dach (2) durch ein sog. Softtop mit einem außerhalb der Heckscheibe (4) einheitlichen, durchgehenden Bezug ausgebildet ist.

## Claims

1. A convertible vehicle (1) with a movable roof (2) which, in its open position, can be stowed in the vehicle body (6) and comprises a rear window (4) held by lateral frame parts (7), said frame parts (7) extending at least to a lower edge (8) of the roof (2), which lower edge (8) abuts a uppermost surface (9) of the vehicle body,
**characterised in that** at least one alignment aid (5) is assigned to the vehicle body (6), which alignment aid (5) comprises a centring pin (13) protruding in the manner of a hook and cooperates with the frame part (7) when the roof (2) closes.

2. The convertible vehicle (1) according to claim 1, **characterised in that** the centring pin (13) has a curved shape which is adapted to the path of the closing frame part (7).

3. The convertible vehicle (1) according to any one of claims 1 or 2, **characterised in that** the centring pin (13), viewed laterally, has the shape of a segment of a circle at least over part of its extent.

4. The convertible vehicle (1) according to any one of claims 1 to 3, **characterised in that** the centring pin (13), in the closed position, is in form-fit engagement with a substantially complementary recess (14) of the frame part (7).

5. The convertible vehicle (1) according to any one of the preceding claims, **characterised in that** the at least one alignment aid (5) is effective in aligning the closing roof with respect to the transverse vehicle direction.

6. The convertible vehicle (1) according to any one of the preceding claims, **characterised in that** the at least one alignment aid (5) is effective in vertically aligning the closing roof.

7. The convertible vehicle (1) according to any one of claims 1 to 6, **characterised in that** two alignment aids (5) are provided on both sides of a tailgate (10) which can be opened and which, in the closed position, abuts the lower edge (8) of the rear window or of a frame carrying the latter.

8. The convertible vehicle (1) according to any one of claims 1 to 7, **characterised in that** the rear window (4) can be swung open upwards with respect to the lateral frame parts (7) when the roof (2) is closed.

9. The convertible vehicle (1) according to any one of claims 1 to 8, **characterised in that** the rear window (4) is held in a pivoting frame which can be moved together with the rear window (4).

10. The convertible vehicle (1) according to claim 9, **characterised in that**, when the roof (2) and the rear window (4) are closed, the upper edge of the closed tailgate (10) can engage behind the lower end of the pivoting frame (4) in a sealing manner.

11. The convertible vehicle (1) according to claim 10, **characterised in that** the rear window (4) can be swung open with respect to the pivoting frame when the tailgate (10) is closed.

12. The convertible vehicle (1) according to any one of claims 1 to 11, **characterised in that** it is provided as a hatchback vehicle and the tailgate (10) comprises a substantially upright rear panel (11) which forms the rear end of the stowage compartment for the roof (2).

13. The convertible vehicle according to any one of claims 1 to 12, **characterised in that** the roof (2) is formed by a soft top with a cover that is uniform and continuous outside the rear window (4).

## Revendications

1. Véhicule cabriolet (1) avec un toit mobile (2) qui, dans sa position ouverte, est escamotable dans la carrosserie (6) et qui comprend une lunette arrière (4) supportée par des éléments de cadre latéraux (7), qui s'étendent au moins jusqu'à un bord inférieur (8) du toit (2), ledit bord inférieur (8) aboutissant à une ligne de caisse (9) de la carrosserie,
**caractérisé en ce qu'**au moins une aide d'alignement (5) est associée à la carrosserie (6), cette aide d'alignement (5) comprenant une goupille de centrage (13), qui fait saillie à la manière d'un crochet, et coopérant avec l'élément de cadre (7) lors de la fermeture du toit (2).

2. Véhicule cabriolet (1) selon la revendication 1, **caractérisé en ce que** la goupille de centrage (13) présente une courbure adaptée au trajet de fermeture de l'élément de cadre (7).

3. Véhicule cabriolet (1) selon l'une quelconque des revendications 1 ou 2, **caractérisé en ce qu'**en vue latérale, la goupille de centrage (13) présente au moins partiellement la forme d'un segment de cercle.

4. Véhicule cabriolet (1) selon l'une quelconque des revendications 1 à 3, **caractérisé en ce qu'**en position fermée, la goupille de centrage (13) s'engrène par complémentarité de forme dans un évidement (14) sensiblement complémentaire de l'élément de cadre (7).

5. Véhicule cabriolet (1) selon l'une quelconque des revendications précédentes, **caractérisé en ce que** the ladite au moins une aide d'alignement (5) effectue l'alignement du toit par rapport à la direction transversale du véhicule lors de la fermeture du toit.

6. Véhicule cabriolet (1) selon l'une quelconque des revendications précédentes, **caractérisé en ce que** ladite au moins une aide d'alignement (5) effectue l'alignement vertical du toit lors de la fermeture de ce dernier.

7. Véhicule cabriolet (1) selon l'une quelconque des revendications 1 à 6, **caractérisé en ce que** l'on prévoit deux aides d'alignement (5) de part et d'autre d'un hayon (10) ouvrable qui, dans sa position fermée, aboutit au bord inférieur (8) de la lunette arrière ou d'un cadre portant celle-ci.

8. Véhicule cabriolet (1) selon l'une quelconque des revendications 1 à 7, **caractérisé en ce que** l'on peut ouvrir la lunette arrière (4), quand le toit (2) est fermé, par pivotement vers le haut par rapport aux éléments de cadre (7) latéraux.

9. Véhicule cabriolet (1) selon l'une quelconque des revendications 1 à 8, **caractérisé en ce que** la lunette arrière (4) est tenue dans un cadre pivotant qui est déplaçable ensemble avec la lunette arrière (4).

10. Véhicule cabriolet (1) selon la revendication 9, **caractérisé en ce que**, le toit (2) et la lunette arrière (4) fermée, le bord supérieur du hayon (10) fermé peut s'engrener d'une manière étanche derrière l'extrémité inférieure du cadre pivotant.

11. Véhicule cabriolet (1) selon la revendication 10, **caractérisé en ce que** l'on peut ouvrir la lunette arrière (4) par pivotement par rapport au cadre pivotant lorsque l'hayon (10) est fermé.

12. Véhicule cabriolet (1) selon l'une quelconque des revendications 1 à 11, **caractérisé en ce qu'**il s'agit d'un véhicule à hayon arrière dont l'hayon (10) comprend un panneau arrière (11) sensiblement debout qui constitue l'extrémité arrière du compartiment de rangement du toit (2).

13. Véhicule cabriolet selon l'une quelconque des revendications 1 à 12, **caractérisé en ce que** le toit (2) est constitué par une capote comprenant une enveloppe uniforme et continue hors la lunette arrière (4).
